## Europäisches Patentamt

## European Patent Office

## Office européen des brevets

(11) Veröffentlichungsnummer: **0 253 380**
**B1**

(12) # EUROPÄISCHE PATENTSCHRIFT

(45) Veröffentlichungstag der Patentschrift:
**12.09.90**

(51) Int. Cl.⁵: **F16H 3/66, F16H 57/04**

(21) Anmeldenummer: **87110226.5**

(22) Anmeldetag: **15.07.87**

(54) Planetenräder-Wechselgetriebe in Form eines Simpson-Satzes.

(30) Priorität: **15.07.86 DE 3623788**

(43) Veröffentlichungstag der Anmeldung:
**20.01.88 Patentblatt 88/3**

(45) Bekanntmachung des Hinweises auf die Patenterteilung:
**12.09.90 Patentblatt 90/37**

(84) Benannte Vertragsstaaten:
**DE FR GB IT SE**

(56) Entgegenhaltungen:
EP-A- 0 164 553
FR-A- 2 440 499
GB-A- 2 104 984
US-A- 4 586 401

(73) Patentinhaber: **FORD-WERKE AKTIENGESELLSCHAFT,**
**Werk Köln-Niehl Henry-Ford-Strasse Postfach 60 40 02,**
**D-5000 Köln 60(DE)**

(84) Benannte Vertragsstaaten: **DE IT SE**

(73) Patentinhaber: **FORD MOTOR COMPANY LIMITED,**
**Eagle Way, Brentwood Essex CM13 3BW(GB)**

(84) Benannte Vertragsstaaten: **GB**

(73) Patentinhaber: **FORD FRANCE SOCIETE ANONYME,**
**344 Avenue Napoléon Bonaparte B.P. 307, F-92506 Rueil**
**Malmaison Cedex(FR)**

(84) Benannte Vertragsstaaten: **FR**

(72) Erfinder: **Premiski, Vladimir, Fliederstrasse 23,**
**D-5358 BAM-Wilerscheid(DE)**
Erfinder: **Wehren, Wilhelm, Fichtenpfad 15,**
**D-5014 Kerpen 6(DE)**
Erfinder: **Höhnel, Rainer, Hahnenstrase 41,**
**D-5024 Pulheim 3(DE)**
Erfinder: **Graef, Kurt, Römerfeldstrasse 7,**
**D-5024 Pulheim(DE)**

(74) Vertreter: **Ritzkowsky, Harald, Dipl.-Ing., Ford-Werke**
**Aktiengesellschaft Patentabteilung NH/DRP**
**Henry-Ford-Strasse, D-5000 Köln 60(DE)**

ACTORUM AG

## Beschreibung

Die Erfindung bezieht sich auf ein Planetenräder-Wechselgetriebe in Form eines Simpson-Satzes, der im Oberbegriff des Patentanspruches erläuterten Art.

Aus der DE-A 34 17 703 ist ein mehrgängiges, über ein hydraulisches Steuerventilsystem schaltbares hydrokinetisch-mechanisches Wechselgetriebe für Kraftfahrzeuge bekannt, bei dem der Hauptteil des Planetenräder-Wechselgetriebes in Form eines Simpson-Satzes vorliegt. Das Eingangsglied des Simpson-Satzes weist zwei Kupplungen $CL_2$ und $CL_3$ auf, mit denen der Antrieb wahlweise mit dem gemeinsamen Sonnenrad bzw. mit dem Ringrad des vorderen Satzes während eines Betriebes in den Vorwärtsgängen verbindbar ist. Der Simpson-Satz weist weiterhin zwei Bremsen $B_2$ und $B_3$ zum Festlegen des gemeinsamen Sonnenrades während eines Betriebes im zweiten Gang bzw. des Planetenträgers des hinteren Satzes während eines Betriebes im ersten Gang und im Rückwärtsgang auf und weist darüber hinaus eine Überholkupplung $OWC_2$ parallel zur Bremse $B_3$ auf um eine Antriebsverbindung im ersten Gang nur in einer Richtung herzustellen. Der Planetenträger des vorderen Satzes und das Ringrad des hinteren Satzes des Simpson-Satzes sind hierbei mit der Abtriebswelle treibend verbunden.

Bei diesem bekannten Planetenräder-Wechselgetriebe in Form eines Simpson-Satzes ist der vordere Bereich der Abtriebswelle benachbart dem gemeinsamen Sonnenrad mit einer Mittelbohrung und radialen Bohrungen zur Schmierölversorgung des auf der Abtriebswelle über Lagerbüchsen gelagerten gemeinsamen Sonnenrades und der mit diesen in Eingriff stehenden Planetenräder versehen.

Diese Mittelbohrung der Abtriebswelle in Verbindung mit der Vielzahl von radialen Bohrungen stellt eine empfindliche Schwächung der Abtriebswelle dar, so daß diese nur einen bestimmten Drehmomentbereich übertragen kann. Demgegenüber sind die in den übrigen Elementen des SimpsonSatzes auftretenden Belastungen nicht so hoch, das heißt, diese wären bei einer bestimmten Auslegung in der Lage einen größeren Drehmomentbereich zu übertragen.

Die Aufgabe der Erfindung ist es, ausgehend von einem Getriebe, daß zunächst zur Übertragung eines bestimmten Drehmomentbereiches von z.B. bis 450 Newtonmeter ausgelegt wurde unter Beibehaltung möglichst vieler Bauteile des Planetenräder-Wechselgetriebes in Form eines Simpson-Satzes für die Übertragung eines höheren Drehmomentbereiches bis zu 750 Newtonmeter geeignet zu machen.

Gemäß der Erfindung wird diese Aufgabe gelöst, indem ein Planetenräder-Wechselgetriebe in Form eines Simpson-Satzes der im Oberbegriff des Patentanspruches erläuterten Art die Kombination der im Kennzeichenteil aufgezeigten Merkmale aufweist.

Dadurch, daß das Ringrad des vorderen Planetenradsatzes über eine Keilverzahnung mit einer Ringradnabe verbunden und auf einem Ansatz am Planetenradträger des vorderen Satzes geführt und gelagert ist, der Planetenradträger des hinteren Satzes über einen Flansch über eine Keilverzahnung mit der Bremstrommel der Bremse $B_3$ verbunden und diese über die Überholkupplung $OWC_2$ mit seitlichen Lagerungen auf einem Ansatz des Gehäuses geführt und gelagert ist, das sich zwischen dem vorderen Planetenradträger und der Ringradnabe des hinteren Satzes erstreckende gemeinsame Sonnenrad des Simpson-Satzes keine radialen Lagerbüchsen aufweist, die Abtriebswelle im Bereich des gemeinsamen Sonnenrades keine Mittelbohrung und keine radialen Bohrungen aufweist und die Schmierölversorgung des Simpson-Satzes über axiale Bohrungen in der Ringradnabe des hinteren Satzes über einen in die Ringradnabe eingesetzten konischen Trichter zum freien Ringraum zwischen der Abtriebswelle und dem nur außen über die Planetenräder schwebend gelagerten, gemeinsamen Sonnenrad erfolgt, kann an der Abtriebswelle ein den zu übertragenden höheren Drehmomentbereich entsprechender größerer Querschnitt bereitgestellt werden, ohne daß hierfür der Außendurchmesser der Abtriebswelle vergrößert werden müßte. Dadurch können die übrigen Getriebeelemente des Simpson-Satzes im wesentlichen in ihrer Dimension unverändert übernommen werden. Auch das Getriebegehäuse für das verstärkte Getriebe kann im wesentlichen mit dem Getriebegehäuse des vorgegebenen Getriebes übereinstimmen.

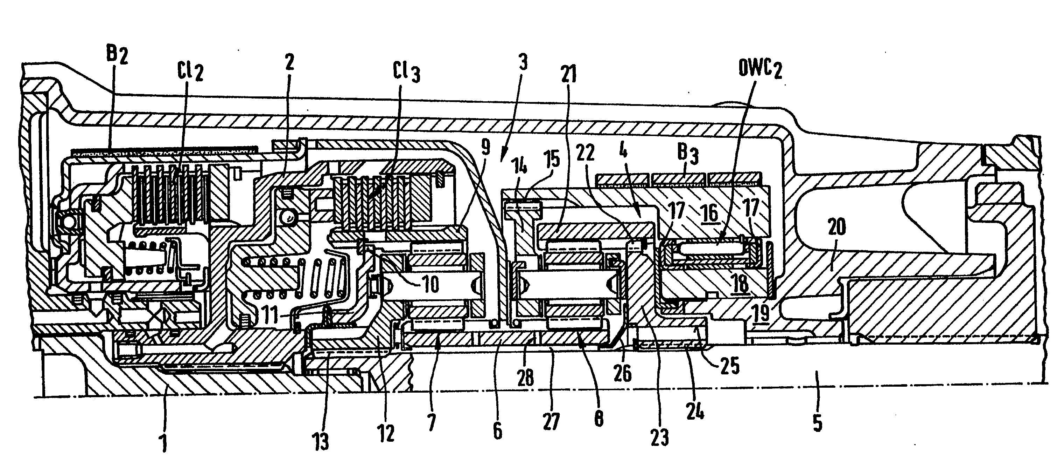

Die Erfindung wird anhand eines in der beiliegenden Zeichnung gezeigten Ausführungsbeispieles näher erläutert.

Es zeigt die Figur

einen vertikalen Teilschnitt durch ein Planetenräder-Wechselgetriebe in Form eines Simpson-Satzes mit der erfindungsgemäßen Kombination von Lagerungsmaßnahmen der Einzelelemente.

Ein Antriebselement 1, das entweder bei einem dreigängigen hydrokinetisch-mechanischen Wechselgetriebe für Kraftfahrzeuge mit der Turbinenwelle eines hydrokinetischen Drehmomentwandlers verbunden ist oder das im Fall eines viergängigen, hydrokinetisch-mechanischen Wechselgetriebes für Kraftfahrzeuge mit einem Vorschaltsatz mit dem Ausgangselement des Vorschaltsatzes verbunden ist, ist treibend mit dem Eingangselement 2 des Simpson-Satzes 3 verbunden dessen Ausgangselement 4 treibend mit der Abtriebswelle 5 des Getriebes verbunden ist.

Das Eingangselement 2 bildet hierbei Teile zweier Lamellenkupplungen $CL_2$ und $CL_3$, die jeweils in bekannter Weise über druckmittelbetätigte Kolbenanordnungen betätigbar sind und die das Antriebselement 1 über das Eingangselement 2 wahlweise mit dem gemeinsamen Sonnenrad 6 der beiden Planetenradsätze 7 und 8 bzw. mit dem Ringrad 9 des vorderen Satzes 7 während eines Betriebes in den Vorwärtsgängen verbinden.

Das Ringrad 9 des vorderen Satzes 7 ist über eine Keilverzahnung 10 mit einer Ringradnabe 11 verbunden die auf einem Absatz des Planetenradträgers 12 des vorderen Satzes geführt und gelagert ist, der über eine Keilverzahnung 13 mit der Abtriebswelle 5 verbunden ist.

Der Simpson-Satz 3 weist zwei Bremsen $B_2$ und $B_3$ auf, wobei mit der Bremse $B_2$ das gemeinsame Sonnenrad 6 während eines Betriebes im zweiten Gang festgelegt werden kann und mittels der Bremse $B_3$ der Planetenträger 14 des hinteren Satzes 8 während eines Betriebes im ersten Gang und im Rückwärtsgang festgelegt werden kann. Der Planetenradträger 14 ist über eine Keilverzahnung 15 zentriert mit der Bremstrommel 16 der Bremse $B_3$ verbunden, die wieder über seitlich der Überholkupplung $OWC_2$ angeordnete Lagerringe 17 zentrisch an einem Innenring 18 abgestützt ist, der an einem Ansatz 19 des Getriebegehäuses 20 angeordnet ist.

Das Ringrad 21 des hinteren Satzes 8 ist über eine Keilverzahnung 22 mit einer Ringradnabe 23 verbunden, die über eine Keilverzahnung 24 mit der Abtriebswelle 5 verbunden ist. Das Ringrad 21 mit der Ringradnabe 23 bildet das Ausgangselement 4 des Simpson-Satzes 3.

Durch die gute zentrische Anordnung des Planetenträgers 12 des vorderen Satzes 7 und die gemäß der Erfindung genaue zentrische Abstützung des Planetenträgers 14 des hinteren Satzes 8 kann das gemeinsame Sonnenrad 6 nur über die mit ihm in Eingriff stehenden Planetenräder schwebend gelagert werden. Die Anordnung von bisher üblichen radialen Lagerbüchsen kann hierbei entfallen. Die Schmierölversorgung des Simpson-Satzes 3 kann nunmehr über axiale Bohrungen 25 in der Ringradnabe 23 erfolgen, wobei ein in der Ringradnabe 23 eingesetzter konischer Trichter 26 das Schmieröl in den Raum 27 zwischen der Abtriebswelle 5 und dem gemeinsamen Sonnenrad 6 führt, von wo es über radiale Bohrungen 28 im gemeinsamen Sonnenrad 6 radial nach außen geführt wird, damit die Planetenradsätze 7 und 8 mit ihren Anlaufscheibenanordnungen ausreichend mit Schmieröl versorgt werden können.

Die in der Abtriebswelle 5 erforderliche Mittelbohrung mit radialen Bohrungen die für die Schmiermittelversorgung bisher erforderlich waren, können somit entfallen und die Abtriebswelle 5 kann bei gleichbleibendem Außendurchmesser zur Übertragung eines höheren Drehmomentbereiches herangezogen werden.

## Patentansprüche

Planetenräder-Wechselgetriebe in Form eines Simpson-Satzes, dessen Eingangsglied (2) Kupplungen $CL_2$ und $CL_3$ zum wahlweisen Verbinden des Antriebselementes (1) mit dem gemeinsamen Sonnenrad (6) bzw. mit dem Ringrad (9) des vorderen Satzes (7) während eines Betriebes in den Vorwärtsgängen aufweist und der zwei Bremsen $B_2$ und $B_3$ zum Festlegen des gemeinsamen Sonnenrades (6) während eines Betriebes im zweiten Gang bzw. des Planetenträgers (14) des hinteren Satzes (8) während eines Betriebes im ersten Gang und im Rückwärtsgang aufweist und wobei eine Überholkupplung $OWC_2$ parallel zur Bremse $B_3$ angeordnet ist um im ersten Gang eine Drehrichtung zu sperren und bei dem der Planetenträger (12) des vorderen Satzes (7) und das Ringrad (21) des hinteren Satzes (8) mit der Abtriebswelle (5) verbunden sind, **gekennzeichnet durch** die Kombination folgender Merkmale:

a) Der Planetenradträger (14) des hinteren Satzes (8) ist über eine Keilverzahnung (15) mit der Bremstrommel (16) der Bremse $B_3$ verbunden, die über die Überholkupplung $OWC_2$ und seitlich davon angeordneten Lagerringen (17) auf dem Innenlaufring (18) abgestützt ist, der auf einem Ansatz (19) im Getriebegehäuse (20) angeordnet ist;

b) das sich zwischen dem Planetenträger (12) des vorderen Satzes (7) und der Ringradnabe (23) des hinteren Satzes (8) erstreckende gemeinsame Sonnenrad (6) weist keine radialen Lagerbüchsen auf;

c) die Abtriebswelle (5), deren vorderes Ende über eine Keilverzahnung (13) mit dem Planetenträger (12) des vorderen Satzes (7) und mit der Ringradnabe (23) des hinteren Satzes (8) über eine Keilverzahnung (24) treibend verbunden ist, weist im Bereich des Simpson-Satzes keine Mittelbohrung und keine radialen Bohrungen auf und

d) die Schmierölversorgung der Planetenradsätze des Simpson-Satzes erfolgt über axiale Bohrungen (25) in der Ringradnabe (23), einen in diese eingesetzten konischen Trichter (26) und den freien Ringraum (27) zwischen der Abtriebswelle (5) und dem schwebend gelagerten, gemeinsamen Sonnenrad (6).

## Revendications

Boîte de vitesses planétaire sous la forme d'un groupe de Simpson, dont l'organe d'entrée (2) comprend des accouplements $CL_2$ et $CL_3$ pour relier sélectivement l'élément d'entrainement (1) à la roue planétaire commune (6), respectivement à la couronne (9) du groupe antérieur (7) lors d'un fonctionnement dans les rapports de marche avant, et qui est équipé de deux freins $B_2$ et $B_3$ en vue de l'immobilisation de la roue planétaire commune (6) lors d'un fonctionnement dans le deuxième rapport, respectivement du porte-satellites (14) du groupe postérieur (8) lors d'un fonctionnement dans le premier rapport et en marche arrière, boîte dans laquelle un accouplement de rattrapage $OWC_2$ est disposé parallèlement au frein $B_3$, de manière à verrouiller une direction de rotation dans le premier rapport, et dans laquelle le porte-satellites (12) du groupe antérieur (7) et la couronne (21) du groupe postérieur (8) sont reliés à l'arbre mené (5), caractérisée par la combinaison des particularités suivantes:

a) le porte-satellites (14) du groupe postérieur (8) est relié, par l'intermédiaire d'une denture conique (15), au tambour de freinage (16) du frein $B_3$ qui prend appui, par l'entremise de l'accouplement de rattrapage $OWC_2$ et de bagues de portée (17) disposées latéralement à ce dernier, sur la bague de roulement interne (18) qui est ménagée sur un appendice (19) dans le carter (20) de la boîte;

b) la roue planétaire commune (6), s'étendant entre le porte-satellites (12) du groupe antérieur (7) et le moyeu (23) de la couronne du groupe postérieur (8), est dépourvue de coussinets de portée radiaux;

c) l'arbre mené (5), dont l'extrémité antérieure est en liaison d'entraînement avec le porte-satellites (12) du groupe antérieur (7) par l'intermédiaire d'une denture conique (13), et avec le moyeu (23) de la couronne du groupe postérieure (8) par l'intermédiaire d'une denture conique (24), est dépourvu d'un perçage central et de perçages radiaux au voisinage du groupe de Simpson, et d) l'alimentation, en huile lubrifiante, des jeux de satellites du groupe de Simpson est assurée par l'intermédiaire de perçages axiaux (25) pratiqués dans le moyeu (23) de la couronne, d'un entonnoir conique (26) engagé dans ledit moyeu, et de l'espace annulaire libre (27) entre l'arbre mené (5) et la roue planétaire commune (6), montée de manière flottante.

## Claims

A planetary gear change-speed gearbox in the form of a Simpson-type gear set, the input member (2) of which comprises clutches $CL_2$ and $CL_3$ for selectively connecting the drive element (1) to the common sun gear (6) or to the ring gear (9) of the forward set (7) during operation in the forward gear speeds and which comprises two brakes $B_2$ and $B_3$ for locking the common sun gear (6) during operation in the second gear speed and for locking the planetary gear carrier (14) of the rear set (8) during operation in the first gear speed and in the reverse gear speed, respectively, an overrunning clutch $OWC_2$ being arranged parallel to the brake $B_3$ in order to lock one direction of rotation in the first gear speed, and the planetary gear carrier (12) of the forward set (7) and the ring gear (21) of the rear set (8) being connected to the driven shaft, characterized by the combination of the following features:

a) the planetary gear carrier (14) of the rear set (8) is connected to the brake drum (16) of the brake $B_3$ by way of a splined connexion (15) and the said brake $B_3$ is supported by way of the overrunning clutch $OWC_2$ and bearing rings (17) disposed laterally thereof on the inner race (18) which is disposed on an attachment (19) in the gearbox casing (20);

b) the common sun gear (6) extending between the planetary gear carrier (12) of the first set (7) and the hub (23) of the ring gear of the rear set (8) comprises no radial bearing bushes;

c) the driven shaft (5), the front end of which is connected in a driving manner by way of a splined connexion (13) to the planetary gear carrier (12) of the forward set (7) and to the hub (23) of the ring gear of the rear set (8) by way of a splined connexion (24), comprises no median bore and no radial bores in the region of the Simpson-type gear set, and

d) the lubricating oil is supplied to the planetary gear sets of the Simpson-type gear set by way of axial bores (25) in the hub (23) of the ring gear, a tapered funnel (27) provided therein and the free annular space (27) between the driven shaft (5) and the common sun gear (6) mounted in a suspended manner.

4